# FASCICULE DE BREVET EUROPEEN

(11) **EP 3 762 312 B1**
(45) Date de publication et mention de la délivrance du brevet: **27.12.2023**
(21) Numéro de dépôt: 19709454.3
(22) Date de dépôt: 05.03.2019
(51) Int. Cl.: B65D 85/68, B64F 1/28, B67D 7/42

(54) **DISPOSITIF ET PROCÉDÉS D'AVITAILLEMENT D'UN AÉRONEF**
VORRICHTUNG UND VERFAHREN ZUM AUFTANKEN EINES FLUGZEUGES
DEVICE AND METHODS FOR REFUELLING AN AIRCRAFT

(30) Priorité: 06.03.2018 FR 1851928
(43) Date de publication de la demande: 13.01.2021
(73) Titulaire: DESAUTEL, 69003 Lyon (FR)
(72) Inventeur: BECK, Claude, 33200 BORDEAUX (FR)
(74) Mandataire: Lavoix
(86) Numéro de dépôt international: PCT/EP2019/055437
(87) Numéro de publication internationale: WO 2019/170668

(56) Documents cités:
- EP-A2- 0 117 702
- WO-A2-2010/128246
- DE-U1-202004 001 186
- US-B1- 6 374 870

## Description

La présente invention a trait à un dispositif d'avitaillement d'un aéronef, ainsi qu'à des procédés d'avitaillement d'un aéronef, au moyen d'un tel dispositif.

Sur les aéroports et aérodromes civils et militaires, il est connu d'utiliser des engins d'avitaillement que l'on déplace à proximité des aéronefs pour procéder au remplissage en carburant de leurs réservoirs.

Ainsi, WO-A-2010/128246 divulgue un engin d'avitaillement dont l'accrocheur d'aile est équipé d'un capteur permettant de déterminer la valeur d'un paramètre, tel que la pression, d'un écoulement de carburant traversant cet accrocheur d'aile. Ce dispositif donne satisfaction. En variante, le capteur peut être utilisé avec un ou plusieurs autres paramètres de l'écoulement, notamment sa température ou son débit.

Pour pouvoir fonctionner, le capteur et son électronique associée doivent être alimentés en courant électrique, ce qui requiert d'utiliser au moins une batterie ou un ensemble comprenant une turbine et un alternateur. Dans le premier cas, la durée de disponibilité du dispositif d'avitaillement dépend de la durée de vie de la batterie, dont le remplacement impose des opérations de maintenance périodiques, pour garantir que le capteur et son électronique associée sont toujours alimentés lorsqu'ils doivent fonctionner. Dans le deuxième cas, la masse ajoutée de la turbine et de l'alternateur, qui sont intégrés à la tête d'accrochage, peut rendre pénibles les manipulations effectuées par l'opérateur en début et en fin d'avitaillement. En outre, ces matériels sont relativement complexes, onéreux et a priori moins fiables que des batteries.

D'autre part, les dispositifs d'avitaillement, dont l'accrocheur d'aile, doivent faire l'objet d'opérations de maintenance programmées de façon périodique, qui ne tiennent pas compte de l'utilisation réelle du dispositif d'avitaillement, alors que cette utilisation peut fortement varier, d'un aéroport ou aérodrome à l'autre ou en fonction du type et du nombre d'aéronefs pour lequel est prévu le dispositif d'avitaillement.

Il est connu respectivement de DE-U-20 2004 001186 et de US-A-6374870 d'équiper un pistolet de remplissage d'un véhicule en carburant avec un capteur de la pression appliquée par un utilisateur sur une poignée mobile ou avec un écran d'affichage. Ces matériels ne sont pas adaptés à l'avitaillement d'un aéronef avec un accrocheur d'aile.

EP0117702 décrit un dispositif d'avitaillement d'un aéronef destiné à être fixé à une conduite d'alimentation du réservoir de l'aéronef. Le dispositif possède un corps de gicleur avec un collier pour se connecter à cette conduite du réservoir de carburant. Une soupape de gicleur comporte un arbre de soupape relié à la soupape et monté dans un palier à douille avec une fente pour une tringlerie d'actionnement.

C'est à ces inconvénients qu'entend plus particulièrement remédier l'invention er proposant un nouveau dispositif d'avitaillement d'un aéronef, dont les opérations de maintenance peuvent être prévues de façon optimisée.

A cet effet, l'invention concerne un dispositif d'avitaillement d'un aéronef, ce dispositif comprenant un conduit de circulation de carburant dont l'extrémité aval est équipée d'un accrocheur d'aile pour son raccordement sur un orifice d'entrée d'un réservoir de carburant de l'aéronef. Cet accrocheur d'aile comprend un corps et une soupape frontale mobile par rapport au corps. Conformément à l'invention, l'accrocheur d'aile comprend également au moins un organe de détection de la position de la soupape frontale, ainsi qu'un système électrique ou électronique de transmission, vers une unité de traitement d'un signal représentatif de la position de la soupape frontale détectée par l'organe de détection. En outre, le dispositif d'avitaillement comprend une unité de comptage des manoeuvres de l'accrocheur d'aile et/ou de la durée effective d'utilisation de l'accrocheur d'aile, sur la base d'un signal représentatif de la position détectée de la soupape frontale, transmis par le système électrique ou électronique. En variante, le dispositif d'avitaillement comprend une mémoire de stockage du nombre de manoeuvres de la soupape frontale détectées par l'organe de détection, alors que le système électrique ou électronique de transmission comprend un terminal portable destiné à récupérer ce nombre de manoeuvres stocké dans la mémoire, ce terminal portable étant prévu pour être connecté sur un ordinateur formant une unité de traitement.

Grâce à l'invention, lorsque l'accrocheur d'aile est équipé d'un capteur de mesure de la valeur d'un paramètre représentatif d'un écoulement de carburant, il est possible d'alimenter ce capteur et son électronique associée en courant électrique uniquement lorsque l'organe de détection a détecté que la soupape frontale est dans une configuration ouverte, correspondant à une utilisation effective du dispositif d'avitaillement. Ceci permet d'allonger la durée de vie de la batterie d'alimentation du capteur et de son électronique associée et d'espacer, en conséquence, l'échange standard de cette batterie ou à sa recharge. Selon un autre aspect de l'invention, indépendant de l'utilisation d'un capteur de mesure d'une valeur d'un paramètre, l'organe de détection permet de compter et mémoriser les manoeuvres de la soupape frontale et/ou sa durée d'utilisation, ce qui permet, là encore, de prévoir des opérations de maintenance préventives en fonction de l'utilisation réelle du dispositif d'avitaillement.

Selon des aspects avantageux mais non obligatoires de l'invention, un tel dispositif peut incorporer une ou plusieurs des caractéristiques suivantes, prises selon toute combinaison techniquement admissible :
- L'organe de détection détecte la position de la soupape frontale de façon indirecte, sur la base de la portion d'un levier de manoeuvre de la soupape frontale.
- L'organe de détection comprend un capteur de proximité monté sur le corps de l'accrocheur d'aile, à proximité du levier lorsque celui-ci est dans une position prédéterminée, notamment dans une position où la soupape frontale est en position fermée ou totalement ouverte.
- L'organe de détection détecte la position de la soupape frontale de façon directe.
- L'organe de détection comprend un contact électrique, notamment un contact électrique sec, de préférence un interrupteur à lame souple.
- Le dispositif d'avitaillement comprend un capteur de mesure de la valeur d'un paramètre représentatif d'un écoulement de carburant transitant par l'accrocheur d'aile, au moins une batterie d'alimentation électrique de ce capteur et une unité électronique de raccordement de la batterie d'alimentation et du capteur en fonction de la position de la soupape frontale détectée par l'organe de détection.

Selon un autre aspect, l'invention concerne un procédé d'avitaillement d'un aéronef au moyen d'un dispositif tel que mentionné ci-dessus, ce procédé d'avitaillement comprenant une étape consistant à utiliser le signal transmis par les moyens électriques ou électroniques pour piloter des moyens d'alimentation en courant électrique d'un capteur de mesure de la valeur d'un paramètre représentatif d'un écoulement de carburant transitant par l'accrocheur d'aile.

Ce procédé de l'invention tire parti du fait que le signal transmis par les moyens électriques ou électroniques permet de connaître la position de la soupape frontale, donc les périodes où le capteur et son électronique associée doivent être alimentés en courant électrique.

Avantageusement, le procédé d'avitaillement de l'invention est effectué au moyen d'un dispositif d'avitaillement comprenant un capteur de mesure de la valeur d'un paramètre représentatif d'un écoulement de carburant transitant par l'accrocheur d'aile, ainsi qu'au moins une batterie d'alimentation de ce capteur et une unité de raccordement de la batterie d'alimentation et du capteur. La fréquence de raccordement de la batterie d'alimentation et du capteur est adaptée en fonction de la proximité de la valeur mesurée par le capteur avec une valeur de seuil prédéterminée.

Grâce à cet aspect du procédé de l'invention, la sollicitation de la batterie d'alimentation peut être diminuée lorsque la valeur du paramètre représentatif est peu critique, c'est-à-dire éloignée de la valeur de seuil prédéterminée, et augmentée dans le cas contraire, lorsque la valeur de ce paramètre s'approche de cette valeur de seuil prédéterminée.

Selon un autre aspect avantageux, le procédé de l'invention est effectué au moyen de deux dispositifs d'avitaillement tels que celui mentionné ci-dessus, chaque dispositif d'avitaillement comprenant un capteur de mesure de la valeur d'un paramètre représentatif d'un écoulement de carburant transitant par l'accrocheur d'aile, au moins une batterie d'alimentation de ce capteur et une unité de raccordement de la batterie d'alimentation électrique et du capteur. Pour un premier dispositif d'avitaillement parmi ces deux dispositifs d'avitaillement, la fréquence de raccordement de la batterie d'alimentation électrique et du capteur a une première valeur. Pour le deuxième dispositif d'avitaillement parmi ces deux dispositifs d'avitaillement, la fréquence de raccordement de la batterie d'alimentation électrique et du capteur a une deuxième valeur distincte de la première valeur, notamment inférieure à cette première valeur.

Grâce à cet aspect du procédé de l'invention, la sollicitation de la batterie du deuxième dispositif d'avitaillement peut être réduite, en considérant que le premier dispositif d'avitaillement sert de maître pour le contrôle de l'écoulement et que le deuxième dispositif d'avitaillement est utilisé comme esclave.

Selon encore un autre aspect avantageux, le procédé de l'invention est effectué au moyen d'un dispositif d'avitaillement tel que mentionné ci-dessus, dans lequel l'organe de détection est configuré pour détecter lorsque la soupape est dans une position intermédiaire, entre une position fermée et une position totalement ouverte. Ce procédé comprend au moins des étapes consistant à :
- b) déterminer une durée pendant laquelle la soupape frontale est en position intermédiaire ;
- c) comparer la durée déterminée à l'étape b) avec une valeur de seuil ; et
- d) en fonction du résultat de la comparaison de l'étape c), considérer que la manoeuvre de verrouillage de l'accrocheur sur l'aéronef a lieu de façon normale ou anormale.

Grâce à cet aspect de l'invention, il est possible de détecter une configuration non fonctionnelle du dispositif d'avitaillement, où la soupape reste dans une position intermédiaire pendant une durée supérieure au simple passage entre la position fermée et la position ouverte. Cet aspect de l'invention permet d'augmenter la sécurité de fonctionnement du dispositif d'avitaillement, notamment par le contrôle d'un verrouillage normal en temps de manoeuvre, et en positon finale.

L'invention sera mieux comprise et d'autres avantages de celle-ci apparaîtront plus clairement à la lumière de la description qui va suivre de plusieurs modes de réalisation d'un dispositif d'avitaillement conforme à l'invention et de procédés d'avitaillement associés, donnée uniquement à titre d'exemple et faite en référence aux dessins annexés, dans lesquels :
- la figure 1 est une représentation schématique de principe d'un engin d'avitaillement incluant un dispositif d'avitaillement conforme à l'invention en cours d'utilisation pour remplir le réservoir d'un aéronef en carburant ;
- la figure 2 est une vue en élévation d'un accrocheur d'aile et d'une partie d'un conduit de circulation de carburant appartenant au dispositif d'avitaillement représenté à la figure 1 ;
- la figure 3 est une vue partiellement en coupe axiale, selon la ligne III-III à la figure 2 ;
- la figure 4 est une représentation schématique d'un sous-système d'alimentation électrique d'un capteur de pression et d'un émetteur montés sur l'accrocheur d'aile des figures 2 et 3 ;
- la figure 5 est une vue analogue à la figure 2 lorsque l'accrocheur d'aile est dans une deuxième configuration d'utilisation ;
- la figure 6 est une vue partiellement en coupe axiale, selon la ligne VI-VI à la figure 5 ;
- la figure 7 est une représentation schématique de l'évolution de la pression détectée par le capteur de la figure 4 en fonction du temps ;
- la figure 8 est une vue partiellement en coupe axiale, analogue à la figure 3, pour un dispositif conforme à un deuxième mode de réalisation de l'invention ;
- la figure 9 est une vue partiellement en coupe axiale, analogue à la figure 6, pour le dispositif conforme au deuxième mode de réalisation et
- la figure 10 est une représentation schématique analogue à la figure 4, pour un dispositif conforme à un troisième mode de réalisation de l'invention.

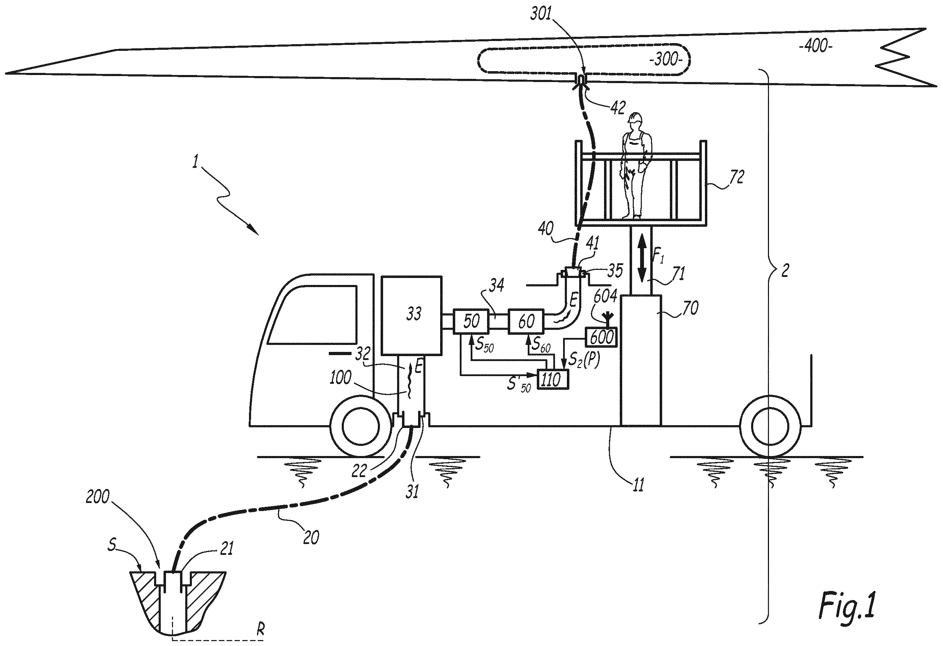

L'engin d'avitaillement ou oléoserveur 1 représenté à la figure 1 se présente globalement sous la forme d'un véhicule industriel équipé d'un tuyau flexible 20 permettant de le raccorder sur une bouche de sortie 200 appartenant à un réseau fixe R de distribution de carburant dans un aéroport. La bouche 200 est disposée sous la surface S du sol, au voisinage d'un emplacement de stationnement d'un aéronef 400. Le tuyau 20 est équipé d'un connecteur 21 de raccordement sur la bouche 200. A son extrémité opposée au connecteur 21, le tuyau 20 est équipé d'un autre connecteur 22 de raccordement sur un connecteur 31 constituant l'embouchure d'un conduit 32 fixe de l'engin 1. En d'autres termes, le tuyau 20 permet de raccorder la bouche de sortie 200 qui appartient au réseau fixe R, au conduit 32, qui appartient à l'engin 1.

Le conduit 32 débouche dans un filtre 33 prévu pour débarrasser le carburant des résidus, notamment aqueux, qu'il peut contenir.

En aval du filtre 33, un conduit 34 s'étend jusqu'à un connecteur 35 sur lequel est raccordé un connecteur amont 41 d'un second tuyau flexible 40. Un accrocheur d'aile 42 est raccordé sur l'extrémité aval 43 du second tuyau flexible 40 et constitue un moyen de branchement du tuyau 40 sur un orifice d'entrée 301 d'un réservoir 300 intégré à l'aile 400 d'un avion.

Selon un aspect optionnel de l'invention qui n'est pas représenté pour la clarté du dessin, mais qui est habituel en pratique, un doublement du second tuyau flexible 40 et de l'accrocheur d'aile 42 est envisageable.

Pour la clarté des dessins, les tuyaux flexibles 20 et 40 sont représentés, à la figure 1, par des traits d'axes correspondant à leurs axes longitudinaux respectifs.

Les pièces 20 à 42 appartiennent à un dispositif d'avitaillement 2 qui fait partie de l'engin 1.

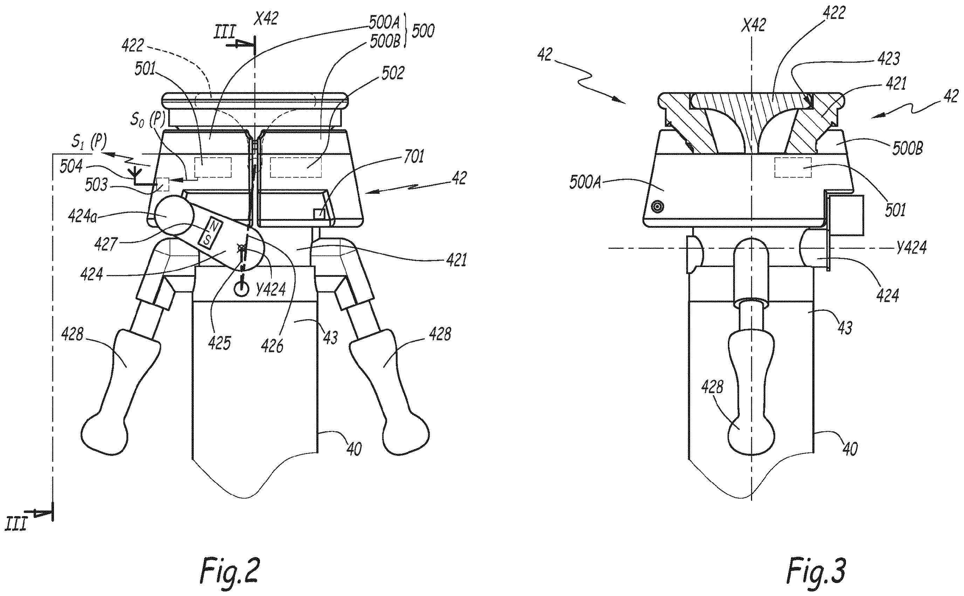

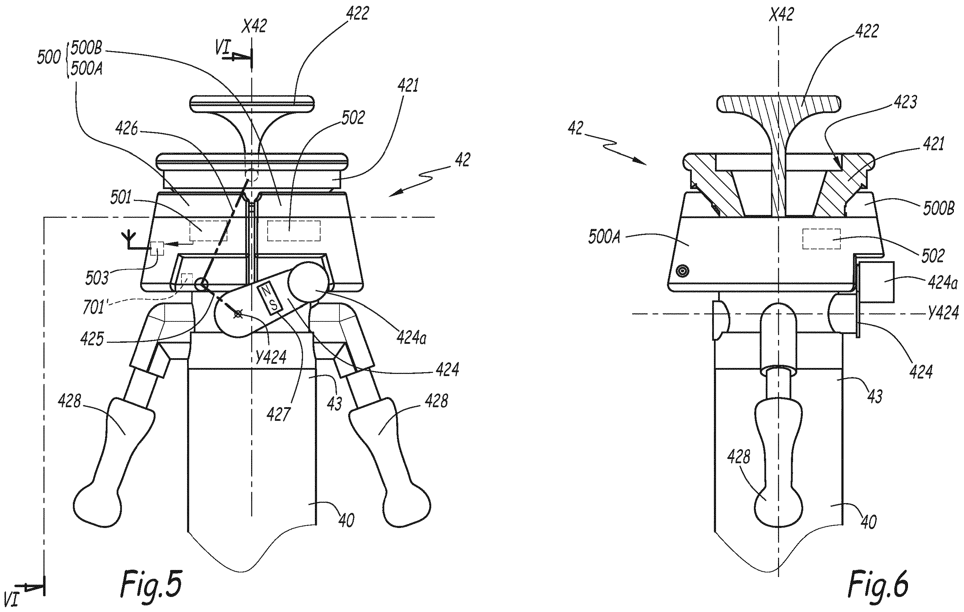

L'accrocheur d'aile 42 comprend un corps cylindrique 421 équipé d'une bague, non représentée et connue en soi, de préférence au profil international ISO45, permettant son verrouillage par coopération de formes sur un connecteur correspondant, également non représenté et connu en soi, délimitant l'orifice 301. L'accrocheur d'aile 42 est également pourvu d'une soupape 422, dite frontale, qui est mobile en translation selon un axe longitudinal X42 de l'accrocheur d'aile 42, entre une première position fermée représentée aux figures 2 et 3, où cette soupape frontale 422 est en appui contre un siège 423 formé par le corps 421, et une deuxième position ouverte représentée aux figures 5 et 6, où la soupape frontale 422 est écartée du siège 423.

Dans sa première position fermée, la soupape frontale 422 empêche l'écoulement de carburant du tuyau flexible 40 vers le réservoir 300. Dans sa deuxième position ouverte, la soupape frontale 422 autorise un tel écoulement.

La manoeuvre de la soupape frontale 422 entre ses première et deuxième positions est effectuée à l'aide d'un levier 424 qui est monté pivotant sur le corps 421 autour d'un axe Y424 perpendiculaire à l'axe longitudinal X42. Le levier 424 est mobile autour de l'axe Y424 entre les deux positions extrêmes représentées respectivement aux figures 2 et 3, d'une part, et aux figures 5 et 6, d'autre part. Un ensemble de bielles 425 et 426 articulées, représentées de façon très schématique, par transparence, aux figures 2 et 5, relie le levier 424 à la soupape 422 et transforme le mouvement de rotation du levier 424, autour de l'axe Y424, en un mouvement de translation de la soupape frontale, le long de l'axe X42.

Il peut ici être fait usage de l'enseignement technique de US-A-4 567 924 ou EP-A-117702. D'autres systèmes de transmission de mouvement entre le levier 424 et la soupape frontale 422 sont également envisageables.

Le levier 424 est équipé d'une poignée 424a de prise en main, qui permet d'exercer un couple d'entraînement en rotation de ce levier autour de l'axe Y424.

Le corps 421 est, quant à lui, équipé de deux poignées 428 de manipulation, qui permettent à un opérateur de l'approcher de l'orifice 301 ou de l'éloigner de celui-ci, respectivement en début et en fin d'avitaillement. L'accrocheur d'aile 42 est verrouillé sur l'orifice 301 et déverrouillé par rapport à celui-ci par rotation autour de l'axe X42, respectivement en début et en fin d'avitaillement.

En variante, les deux poignées 428 sont remplacées par un volant.

Les éléments 32 à 34 définissent ensemble un trajet fixe d'écoulement du carburant, entre deux lignes flexibles constituées respectivement par les tuyaux 20 et 40. Ce trajet d'écoulement fixe et ces lignes flexibles s'étendent entre le connecteur 21 de branchement sur le réseau R et l'accrocheur d'aile 42 de branchement sur l'orifice 301, au sein du dispositif d'avitaillement 2.

On note E l'écoulement de carburant entre la bouche 200 et le réservoir 300.

Le dispositif d'avitaillement 2 est équipé d'un compteur 50 qui permet de mesurer la quantité de carburant transitant par le conduit 34 du fait de l'écoulement E, c'est-à-dire la quantité de carburant délivrée au réservoir 300. Le dispositif d'avitaillement 2 comporte également un régulateur de pression 60 qui permet de contrôler la pression de l'écoulement E dans la portion aval du conduit 34.

Une unité électronique 110 appartenant au dispositif d'avitaillement 2 est montée sur le châssis de l'engin 1 et contrôle, par des signaux électroniques adaptés S₅₀ et S₆₀, respectivement le compteur 50, le régulateur de pression 60. Le compteur 50 fournit, quant à lui, à l'unité 110, un signal S'₅₀ représentatif du comptage qu'il effectue.

L'engin 1 porte un vérin hydraulique 70 dont la tige 71 est équipée d'une plateforme 72 sur laquelle se tient un opérateur qui peut manipuler la partie aval du tuyau 40, notamment l'accrocheur d'aile 42. La tige 71 permet à l'opérateur, par son mouvement vertical ascendant ou descendant représenté par la double flèche F₁, d'accéder à l'orifice d'entrée 301.

Un module 500, qui appartient également au dispositif d'avitaillement 2, est disposé autour du corps 421 de l'accrocheur d'aile 42. Ce module 500 se présente sous la forme de deux demi-coquilles 500A et 500B qui enserrent le corps 421. Le module 500 comprend une cellule 501 de mesure de la pression de l'écoulement E juste avant sa sortie de l'accrocheur d'aile 42. La cellule 501 est logée dans la demi-coquille 500A.

Compte tenu de l'emplacement du module 500 qui est à proximité immédiate de l'accrocheur d'aile 42, la cellule 501 permet de connaître, avec un degré de précision satisfaisant, la pression de l'écoulement E lorsqu'il pénètre dans le réservoir 300, à travers l'orifice 301. En d'autres termes, l'emplacement du module 500, au niveau du moyen de raccordement formé par l'accrocheur d'aile 42, permet à la cellule 501 de donner une valeur représentative de la pression P de l'écoulement E transitant à travers l'accrocheur d'aile 42 quand il pénètre dans le réservoir 300. La cellule 501 forme, à ce titre, un capteur de mesure de la valeur de cette pression.

Dans l'exemple, le module 500 est au voisinage de la soupape frontale 422, de sorte que la distance entre la cellule 501 et le point de transfert du carburant du système d'avitaillement vers l'aéronef est inférieure à 10 cm. Le point de transfert du carburant est défini à la sortie de l'accrocheur d'aile 42 comme le point où la propriété du carburant passe de la compagnie fournissant le carburant à la compagnie exploitante de l'aéronef.

La cellule 501 est alimentée en énergie électrique à partir d'une batterie 502, logée dans la demi-coquille 500B. Des conducteurs électriques non représentés s'étendent entre les demi-coquilles 500A et 500B pour relier entre elles la cellule 501 et la batterie 502.

La cellule 501 est raccordée électriquement à un émetteur radio 503 également logé dans la demi-coquille 500A et alimenté par la batterie 502. La cellule 501 fournit à l'émetteur 503 un signal électronique S₀(P) correspondant à la valeur de la pression qu'elle mesure.

L'émetteur 503 est équipé d'une antenne 504 qui lui permet d'émettre un signal non filaire S₁(P) incluant des données correspondant à la valeur de la pression P mesurée par la cellule 501. A titre d'exemple, le mode de transmission du signal S₁(P) est assuré par radio fréquence mais, en variante, il peut se faire par infra-rouge.

Par ailleurs, le dispositif d'avitaillement est équipé d'un récepteur 600 appairé au module 500 et dont l'antenne 604 lui permet de recevoir le signal S₁(P).

Le récepteur 600 est alors en mesure de transmettre à l'unité électronique de contrôle 110 un signal S₂(P) représentatif de la pression P de l'écoulement E détectée par la cellule 501.

L'unité 110 peut alors tenir compte de la valeur de cette pression P pour piloter, notamment, le régulateur de pression 60 au moyen du signal électronique approprié S₆₀.

Pour que le capteur de pression formé par la cellule 501 fonctionne efficacement, il importe qu'il soit alimenté en énergie électrique avec un niveau suffisant, à partir de la batterie 502. Ainsi, le niveau de cette batterie 502 est critique pour le fonctionnement de l'engin 1.

Afin d'éviter que la batterie 502 se décharge lorsque l'accrocheur d'aile n'est pas utilisé, et en tenant compte du fait que la cellule 501 ne doit être alimentée que lorsqu'un écoulement E transite effectivement à travers l'accrocheur d'aile 42, on peut prévoir de conditionner l'alimentation électrique de la cellule 501 par la batterie à l'existence d'un tel écoulement E.

En tenant compte de cette approche, l'accrocheur d'aile 42 est équipé d'un organe 701 de détection de la position de la soupape 422, ce qui permet de déduire si un écoulement E est susceptible d'avoir lieu effectivement lieu à travers l'accrocheur d'aile 42, puisque la position de la soupape frontale 422 détermine la possibilité d'un tel écoulement.

Dans ce premier mode de réalisation, l'organe de détection 701 est intégré à la demi-coquille 500B et positionné pour détecter indirectement la position de la soupape frontale 422 en détectant la position du levier 424. En effet, comme la liaison cinématique entre le levier 424 et la soupape 422 est univoque, grâce aux bielles 425 et 426, il suffit de repérer la position du levier 424 pour en déduire celle de la soupape frontale 422.

Ceci tire parti du fait que, lors de la manipulation de l'accrocheur d'aile 422, l'opérateur est sensé manoeuvrer le levier 424 pour déplacer la soupape 422 entre ses première et deuxième positions, en début d'avitaillement, puis entre ses deuxième et première positions, en fin d'avitaillement.

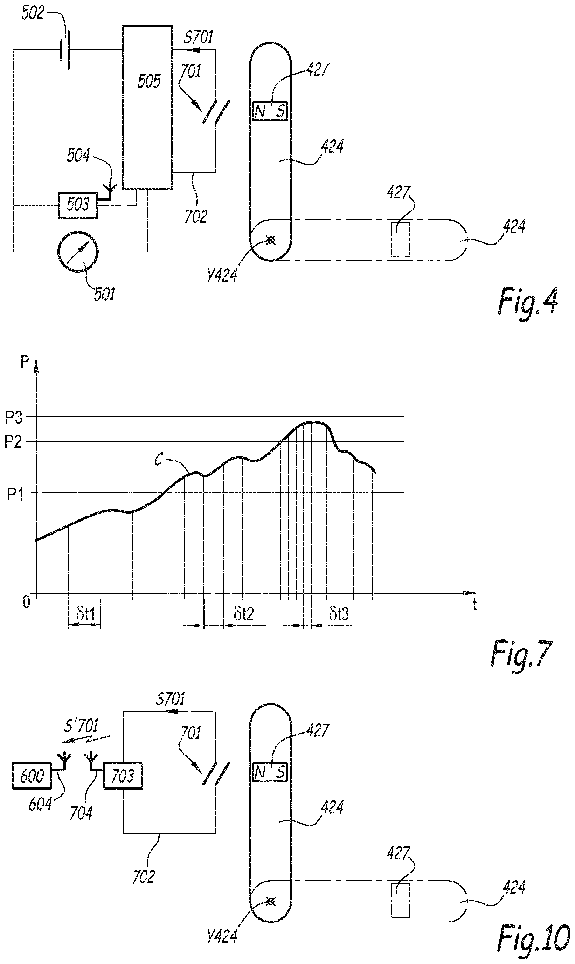

L'organe de détection 701 peut être formé par un capteur de proximité capable de réagir à la présence du levier 424 dans son environnement immédiat. Ce capteur de proximité peut comprendre un contact électrique, de préférence un contact électrique sec, capable de réagir à la présence d'un organe magnétique tel qu'un aimant permanent 427 monté sur le levier 424. Dans l'exemple de la figure 4, un interrupteur à lame souple ou « ILS » forme l'organe de détection 701 et est intercalé dans une ligne électrique 702 raccordée à une unité électronique de commande 505 qui contrôle la cellule 501 et l'émetteur 503 en les alimentant à partir de la batterie 502. L'interrupteur à lame souple 701 peut prendre une configuration ouverte ou une configuration fermée, en fonction de la présence ou non de l'aimant 427 dans son voisinage. Par exemple, la construction de l'interrupteur à lame souple 701 et le positionnement de l'aimant 427 sur le levier 424, ainsi que l'orientation de ses pôles, peuvent être prévus pour que, lorsque l'aimant 427 est suffisamment proche de l'interrupteur à lame souple 701 pour avoir une influence sur son état, l'interrupteur à lame souple 701 soit ouvert, ce qui correspond à la configuration en traits pleins à la figure 4. Au contraire, lorsque l'aimant 427 est éloigné de l'interrupteur à lame souple 701 du fait d'une rotation autour de l'axe Y424 comme représenté en traits d'axe, l'interrupteur à lame souple 701 est fermé, ce qui n'est pas représenté à la figure 4.

On considère un signal électrique S701 représentatif de l'état de l'interrupteur à lame souple 701. Ce signal électrique S701 vaut zéro lorsque l'interrupteur est ouvert et il prend une valeur non nulle, égale à l'intensité du courant circulant dans la ligne 702, lorsque l'interrupteur 701 est fermé. Ce signal électrique S701 peut être exploité par l'unité électronique de commande 505 pour alimenter la cellule 501 uniquement lorsque le signal S701 est non nul, c'est-à-dire lorsque le levier 424 est dans une position correspondant à la deuxième position de la soupape frontale 422. L'unité électronique de commande 505 constitue donc une unité de traitement du signal électrique S701.

L'unité électronique de commande 505 peut utiliser les mêmes règles pour alimenter ou non l'émetteur 503 qui est également consommateur de courant.

L'utilisation d'un interrupteur à lame souple 701 est particulièrement avantageuse puisqu'un tel interrupteur forme un organe de détection qui ne consomme pas de courant en lui-même. Toutefois, d'autres types d'organes de détection de la position du levier 424 sont envisageables, par exemple sur la base d'un effet magnétique ou inductif, notamment à partir d'un capteur à effet Hall.

Dans l'exemple des figures 2 à 6, l'interrupteur à lame souple 701 est positionné dans la demi-coquille 500B, de telle sorte qu'il détecte le levier 424 lorsque celui-ci est dans une position correspondant à la deuxième position de la soupape frontale 422.

Une autre configuration est toutefois possible, comme représentée en traits mixtes à la figure 5 où un autre interrupteur à lame souple 701' est positionné dans la demi-coquille 500A, au voisinage du levier 424 lorsque celui-ci est dans une configuration correspondant à la première position de la soupape frontale 422.

Selon une autre variante, il est possible de prévoir deux organes de détection de la position de la soupape frontale, tels que les interrupteurs 701 et 701', respectivement au voisinage de chacune des deux positions extrêmes de la course du levier 424 qui correspondent respectivement aux première et deuxième positions de la soupape frontale 422.

Dans ce cas, il est possible de déterminer quand le levier 424 est dans une position intermédiaire, distincte de ses positions de fin de course représentées respectivement aux figures 2 et 5, car, dans ce cas, il n'est pas à proximité d'un des interrupteurs 701 et 701'. Dans ce cas, la soupape frontale est également dans une position intermédiaire entre ses première et deuxième positions. En cours d'utilisation normale de l'accrocheur d'aile 42, la soupape frontale est soit dans sa première position fermée, soit dans sa deuxième position ouverte correspondant à l'avitaillement de l'aéronef 400. La soupape frontale 422 ne passe dans une configuration intermédiaire que pendant un intervalle de temps de durée Δt relativement faible, inférieure à 2 secondes. L'utilisation des deux organes de détection 701 et 701' permet de détecter quand la soupape frontale est dans aucune de ses première et deuxième positions et donc de réagir si la durée Δt pendant laquelle la soupape frontale est dans une position intermédiaire est supérieure à une valeur de seuil Δ0, par exemple égale à 5 secondes. En d'autres termes, il est possible d'assurer une sécurité complémentaire de l'engin d'avitaillement 1 en déterminant une durée Δt pendant laquelle la soupape frontale 422 est dans une position intermédiaire, entre ses première et deuxième positions, en comparant cette durée avec une valeur de seuil Δ0 et en considérant que la manoeuvre de verrouillage de l'accrocheur à la prise de l'avion a lieu de façon normale ou anormale en fonction du résultat de cette comparaison. Plus précisément, la manoeuvre de verrouillage qui assure l'étanchéité de l'écoulement E peut être considérée comme ayant lieu de façon normale lorsque la durée Δt est inférieure à la valeur de seuil Δ0 et anormale dans le cas inverse.

Afin de mieux maîtriser la consommation électrique de la cellule 501 et de l'émetteur 503, la criticité de la valeur de la pression P mesurée par la cellule 501 peut être prise en compte. On considère le cas où la valeur maximale admissible de la pression P de l'écoulement E dans l'accrocheur d'aile 42 est de 3,5 bars. Cette valeur de seuil étant connue, il est possible que la pression de l'écoulement E à l'intérieur de l'accrocheur d'aile 42 soit très inférieure à cette valeur de seuil, auquel cas la valeur de pression détectée par la cellule 501 n'est pas réellement critique, en ce sens que l'on peut faire l'hypothèse raisonnable que l'engin d'avitaillement 1 fonctionnera correctement pendant une période de temps relativement longue sans dépasser la valeur de seuil de 3,5 bars. Au contraire, lorsque la pression détectée par la cellule 501 est proche de la valeur de seuil de 3,5 bars, le risque de dépasser cette valeur de seuil dans un avenir immédiat et de devoir limiter ou interrompre l'écoulement E de l'engin d'avitaillement 1 est plus élevé.

Il est possible d'adapter la cadence de mesure de la pression en fonction de la criticité de la pression mesurée. En effet, si l'on considère que la valeur maximum admissible pour la pression dans l'accrocheur d'aile 42 est de 3,5 bars, on peut définir trois niveaux de pression définis par trois plages de pression à savoir :
- une première plage où la pression est inférieure à une première valeur de seuil P1 égale à 2 bars,
- une deuxième plage où la pression est supérieure à la première valeur de seuil P1 et inférieure à une deuxième valeur de seuil P2 égale à 3 bars, et
- une troisième plage où la pression est supérieure à une troisième valeur de seuil P3 égale à 3 bars.

On fait l'hypothèse que, lorsque la pression P est inférieure à 2 bars, il y a peu de risque d'atteindre très rapidement la valeur de 3,5 bars. On fait l'hypothèse que, lorsque la pression P est entre 2 et 3 bars, il y a un risque moyen d'atteindre la valeur limite de 3,5 bars. On fait l'hypothèse que, lorsque la pression P est supérieure à 3 bars, il y a un risque élevé d'atteindre la valeur limite de 3,5 bars.

On définit un intervalle de temps, ou écart temporel, δt entre deux mesures successives de la pression dans l'accrocheur d'aile 42, effectuées au moyen de la cellule 501.

On peut prévoir que, si la pression détectée à l'étape précédente est inférieure à la valeur de seuil P1, alors l'écart temporel δt prend une première valeur δt1. Lorsque la valeur de seuil détectée à l'étape précédente est comprise entre les valeurs P1 et P2, alors l'écart temporel δt prend la valeur δt2. Enfin, lorsque la pression détectée à l'étape précédente est supérieure à la valeur de seuil P2, alors l'écart temporel δt prend la valeur δt3.

La valeur δt1 est strictement supérieure à la valeur δt2 qui est elle-même strictement supérieure à la valeur δt3. A titre d'exemple, on peut prévoir que δt1 vaut 500 millisecondes (ms), δt2 vaut 200 ms et δt3 vaut 50 ms.

Dans ces conditions, tant que la valeur de pression détectée par la cellule 501 est inférieure à la valeur P1, les mesures peuvent être espacées de δt1, soit 500 ms, ce qui permet de connecter la batterie 502 à la cellule 501 au moyen de l'unité de commande 505 relativement peu souvent, à une fréquence de 2 Hertz (Hz) et de solliciter relativement peu la batterie 502, donc d'augmenter sa durée de vie par rapport au cas où toutes les mesures auraient lieu avec un intervalle de temps égal à 50 ms. Il en va de même tant que la pression est comprise entre des valeurs P1 et P2, où les mesures peuvent être espacées de δt2, soit 200 ms, donc où l'unité 505 connecte la batterie 502 à la cellule 501 avec une fréquence de 5 Hz. Et lorsque la valeur P mesurée précédemment est supérieure à 3 bars, l'écart temporel est fixé à 50 ms et la fréquence de connexion de la batterie 502 à la cellule 501 est de 20 Hz.

La figure 7 montre cette approche avec la courbe C qui représente les valeurs de pression détectées en fonction du temps.

Les valeurs numériques mentionnées ci-dessus ne sont pas limitatives. D'autres valeurs sont possibles pour P1, P2, P3, δt1, δt2 et δt3.

Ainsi, selon cet aspect de l'invention, la fréquence de raccordement de la batterie 502 et du capteur 501, qui est égale à 1/δt, est adaptée, selon que la valeur P mesurée est plus ou moins proche de la valeur de seuil P3.

Dans une variante de l'invention qui n'est pas représentée, il est possible d'utiliser deux dispositifs d'avitaillement tels que le dispositif 2 mentionné ci-dessus pour remplir un même réservoir 300. Dans ce cas, les deux dispositifs d'avitaillement, que l'on nommera 2A et 2B dans la suite de cette description débitent dans un même collecteur à partir duquel le carburant est déversé dans le réservoir 300. On peut faire l'hypothèse que la pression de carburant dans chacun des deux accrocheurs d'aile 42 des deux dispositifs d'avitaillement 2A et 2B est la même où approximativement la même.

Dans ce cas, on peut considérer que l'un des deux dispositifs d'avitaillement, par exemple le dispositif d'avitaillement 2A, constitue un dispositif maître, alors que l'autre dispositif d'avitaillement, dans l'exemple le dispositif 2B, constitue un dispositif esclave. Dans ces conditions, il est possible que la fréquence d'échantillonnage 1/δtA du dispositif d'avitaillement maître 2A soit choisie avec une valeur relativement élevée, par exemple 20 Hz, alors que la fréquence d'échantillonnage 1/δtB utilisée pour le dispositif d'avitaillement esclave 2B est choisie avec une valeur bien inférieure, par exemple égale à 2 Hz. En effet, si le dispositif d'échantillonnage 2A est le dispositif maître, il suffit de surveiller la pression dans l'accrocheur d'aile 42 de ce dispositif d'échantillonnage pour réagir en cas de dérive. La vérification de la pression dans l'accrocheur d'aile 42 du dispositif d'avitaillement esclave 2B est une simple vérification de cohérence qui peut avoir lieu à une fréquence moins élevée que la vérification effectuée sur le dispositif d'avitaillement maître 2A.

En pratique, la fréquence d'échantillonnage mentionnée ci-dessus est la fréquence de raccordement de la batterie d'alimentation 502 et du capteur 501. En d'autres termes, c'est l'unité 505 de chaque dispositif d'avitaillement 2A ou 2B qui permet d'ajuster la fréquence d'échantillonnage à la valeur 1/δtA ou 1/δtB. Les valeurs numériques indiquées ci-dessus pour les grandeurs 1/δtA et 1/δtB ne sont pas limitatives. D'autres valeurs sont envisageables pour les fréquences de raccordement de la batterie 502 et du capteur 501 dans les deux dispositifs d'avitaillement 2A et 2B.

Le dispositif d'avitaillement pour lequel cette fréquence de raccordement est la plus élevée peut être considérée comme le dispositif d'avitaillement maître.

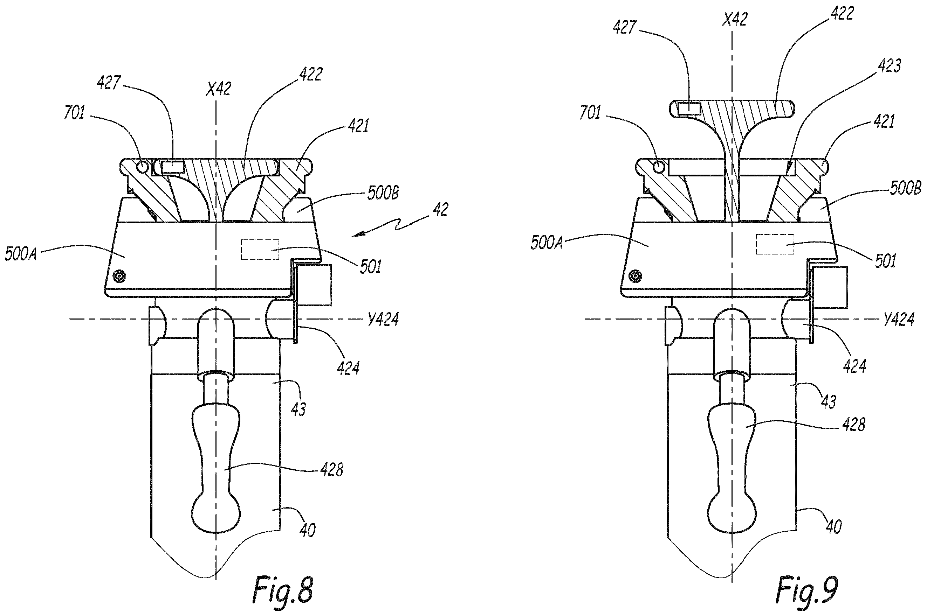

Dans le deuxième mode de réalisation de l'invention représenté aux figures 8 et 9, les éléments analogues à ceux du premier mode de réalisation portent les mêmes références et fonctionnent de la même façon. Dans ce qui suit, on explique ce qui distingue un mode de réalisation du précédent.

Dans ce mode de réalisation, un aimant 427 est intégré dans la soupape frontale 42, alors qu'un interrupteur à lame souple 701 est intégré dans le corps 421 de l'accrocheur d'aile 42. Dans ce cas, la détection de la position de la soupape frontale 42 est directe.

Dans les exemples mentionnés ci-dessus, le paramètre détecté grâce à la cellule 501 est la pression P de l'écoulement E. En variante, un ou plusieurs autres paramètres représentatifs de l'écoulement E transitant par l'accrocheur d'aile 42 peuvent être mesuré, en particulier sa température T, son débit Q ou le volume V qui traverse cet accrocheur d'aile à partir d'un instant prédéterminé, ainsi que sa densité, sa masse ou sa turbidité. La méthode expliquée ci-dessus au sujet de la criticité de la mesure de la pression est transposable à la mesure des autres paramètres T, Q, V et autres mentionnés ci-dessus.

L'invention n'est pas limitée au cas où l'accrocheur d'aile 42 est équipé d'un capteur de mesure de la valeur d'un paramètre P, T, Q ou V comme expliqué ci-dessus.

En effet, comme représenté à la figure 10, l'interrupteur à lame souple 701 peut être connecté, par la ligne électrique 702, à une unité électronique 703 équipée d'une antenne 704. En fonction du signal S701 délivré par l'interrupteur à lame souple 701, l'unité 703 est capable d'émettre, à travers l'antenne 704, un signal S'701 à destination du récepteur 600, comme envisagé ci-dessus pour le signal S₂(P).

En d'autres termes, l'organe de détection formé par l'interrupteur à lame souple 701 permet de tenir l'unité 110 informée de la position de la soupape frontale 422 grâce au signal S'701. Ceci s'applique au cas où cette position est détectée de façon indirecte, comme dans le premier mode de réalisation, ou directe, comme dans le deuxième mode de réalisation.

L'unité électronique de contrôle 110 forme ainsi une unité de traitement du signal S'701.

L'unité électronique de contrôle 110 peut être équipée d'un moyen, tel qu'un microprocesseur, permettant de comptabiliser le temps passé par la soupape frontale 422 dans sa deuxième position, sur la base du signal S'701 reçu par le récepteur 600. En effet, ce temps correspond au temps d'utilisation effective de l'accrocheur d'aile 422. Ceci permet de planifier des opérations de maintenance de cet accrocheur d'aile en fonction de son utilisation effective, et non pas de façon périodique, décorrélée de cette utilisation effective.

En variante, le calcul du temps d'utilisation effective de l'accrocheur d'aile 42 peut avoir lieu dans l'unité électronique 703 qui transmet alors un signal S'701 qui dépend de cette durée effective d'utilisation. Là encore, ceci permet de prévoir les opérations de maintenance de l'accrocheur d'aile 42 en fonction de son utilisation effective.

Selon une autre variante, au lieu de, ou en complément au fait de compter le temps passé par la soupape frontale 422 dans sa deuxième position, un microprocesseur de l'unité 110 ou 703 peut compter le nombre de manoeuvres de cette soupape entre ses première et deuxième positions, ce qui correspond au nombre de manoeuvres de l'accrocheur d'aile 42. Ce nombre de manoeuvres, qui correspond au nombre de chargement de valeur du signal S701, S₂(P) ou S'701 selon le mode de réalisation, peut être utilisé pour déclencher une opération de maintenance, à temps, par rapport à l'usure de l'accrocheur d'aile.

L'invention est décrite ci-dessus dans le cas où le dispositif d'avitaillement 2 est monté sur l'engin 1 et relié à un réseau d'alimentation en carburant. Elle est toutefois applicable au cas où ce dispositif est monté à poste fixe. Elle est également applicable au cas où l'engin 1 est un avitailleur équipé d'une citerne de carburant et d'une pompe.

En variante, la cellule 701 ou 701' du premier mode de réalisation peut être montée sur le corps 421 sans être intégrée à une demi-coquille. De même, la cellule 701 du deuxième mode de réalisation peut être intégrée à un module rapporté sur le corps 421.

Selon une variante non représentée de l'invention, la batterie 502 et certains composants électroniques peuvent être logés dans l'espace disponible à l'intérieur des poignées 428 ou du volant de manoeuvre de l'accrocheur d'aile 42.

Selon une autre variante non représentée de l'invention, le comptage du nombre de manoeuvres de la soupape 422 est comptabilisé localement par l'organe de détection 701 ou 701' et stocké dans une mémoire montée sur l'accrocheur d'aile 42, notamment intégrée à l'électronique associée à cet organe. Cette mémoire est périodiquement accédée par un terminal portable, de type smartphone ou clef USB, pour récupérer les données qu'elle contient. Dans ce cas, le système électrique électronique de transmission est formé par les organes de raccordement entre cette mémoire et ce terminal portable et l'unité de traitement est constituée d'un ordinateur sur lequel sera ultérieurement connecté le terminal portable, pour la récupération et le traitement des données qu'il contient.

Dans les différents modes de réalisation et variantes de l'invention, le signal S701 est horodaté.

Les caractéristiques des modes de réalisation et variantes envisagés ci-dessus peuvent être combinés entre eux pour générer de nouveaux modes de réalisation de l'invention telle que définie dans les revendications.

## Revendications

1. Dispositif (2) d'avitaillement d'un aéronef (400), ce dispositif comprenant un conduit (40) de circulation de carburant dont l'extrémité aval (43) est équipée d'un accrocheur d'aile (42) pour son raccordement sur un orifice d'entrée (301) d'un réservoir de carburant (300) de l'aéronef, l'accrocheur d'aile comprenant un corps (421) et une soupape frontale (422) mobile par rapport au corps, **caractérisé**
**en ce que** l'accrocheur d'aile (42) comprend au moins un organe (701 ; 701') de détection de la position de la soupape frontale (422) et un système (702, 703) électrique ou électronique de transmission, vers une unité de traitement (505, 110) d'un signal (S701) représentatif de la position de la soupape frontale détectée par l'organe de détection, et **en ce que** le dispositif d'avitaillement comprend
- une unité (110 ; 703) de comptage des manoeuvres de l'accrocheur d'aile (42) et/ou de la durée effective d'utilisation de l'accrocheur d'aile (42), sur la base d'un signal (S701 ; S'701) représentatif de la position détectée de la soupape frontale (422), transmis par le système électrique ou électronique (702, 703) ou
- une mémoire de stockage du nombre de manoeuvres de la soupape frontale (422) détectées par l'organe de détection (701), alors que le système électrique ou électronique de transmission comprend un terminal portable destiné à récupérer ce nombre de manoeuvres stocké dans la mémoire, ce terminal portable étant prévu pour être connecté sur un ordinateur formant une unité de traitement.

2. Dispositif d'avitaillement selon la revendication 1, **caractérisé en ce que** l'organe de détection (701 ; 701') détecte la position de la soupape frontale (422) de façon indirecte, sur la base de la portion d'un levier (424) de manoeuvre de la soupape frontale.

3. Dispositif d'avitaillement selon la revendication 2, **caractérisé en ce que** l'organe de détection comprend un capteur de proximité (701 ; 701') monté sur le corps (421) de l'accrocheur d'aile (422), à proximité du levier (424) lorsque celui-ci est dans une position prédéterminée, notamment dans une position où la soupape frontale (422) est en position fermée ou totalement ouverte.

4. Dispositif d'avitaillement selon la revendication 1, **caractérisé en ce que** l'organe de détection (701) détecte la position de la soupape frontale (422) de façon directe.

5. Dispositif d'avitaillement selon l'une des revendications précédentes, **caractérisé en ce que** l'organe de détection comprend un contact électrique, notamment un contact électrique sec, de préférence un interrupteur à lame souple (701).

6. Dispositif d'avitaillement selon l'une des revendications précédentes, **caractérisé en ce qu'**il comprend un capteur (501) de mesure de la valeur d'un paramètre (P, T, Q, V) représentatif d'un écoulement (E) de carburant transitant par l'accrocheur d'aile (42), au moins une batterie (502) d'alimentation électrique de ce capteur et une unité électronique (505) de raccordement de la batterie d'alimentation et du capteur en fonction de la position de la soupape frontale (422) détectée par l'organe de détection (701).

7. Procédé d'avitaillement d'un aéronef (400) au moyen d'un dispositif d'avitaillement selon l'une des revendications précédentes, **caractérisé en ce qu'**il comprend une étape consistant à :
a) utiliser le signal (S701) transmis par le système (702, 703) électrique ou électronique pour piloter des moyens (505) d'alimentation en courant électrique d'un capteur (501) de mesure de la valeur d'un paramètre (P, T, Q, V) représentatif d'un écoulement (E) de carburant transitant par l'accrocheur d'aile (42).

8. Procédé d'avitaillement d'un aéronef (400) selon la revendication 7, dans lequel le dispositif d'avitaillement comprend un capteur (501) de mesure de la valeur d'un paramètre (P, T, Q, V) représentatif d'un écoulement (E) de carburant transitant par l'accrocheur d'aile (42), au moins une batterie (502) d'alimentation de ce capteur et une unité (505) de raccordement de la batterie d'alimentation électrique et du capteur, **caractérisé en ce que** la fréquence (1/δt) de raccordement de la batterie d'alimentation électrique et du capteur est adaptée en fonction de la proximité de la valeur (P) mesurée par le capteur avec une valeur de seuil prédéterminée (P3).

9. Procédé d'avitaillement d'un aéronef (400) selon la revendication 7 au moyen de deux dispositifs d'avitaillement (2A, 2B) selon l'une des revendications 1 à 6, chaque dispositif d'avitaillement comprenant un capteur (501) de mesure de la valeur d'un paramètre (P, T, Q, V) représentatif d'un écoulement (E) de carburant transitant par l'accrocheur d'aile (42), au moins une batterie (502) d'alimentation de ce capteur et une unité (505) de raccordement de la batterie d'alimentation électrique et du capteur, **caractérisé en ce que**
- pour un premier dispositif d'avitaillement (2A) parmi les deux dispositifs d'avitaillement, la fréquence de raccordement de la batterie (502) d'alimentation électrique et du capteur (501) a une première valeur (1/δtA)
- pour le deuxième dispositif d'avitaillement (2B) parmi les deux dispositifs d'avitaillement, la fréquence de raccordement de la batterie (502) d'alimentation électrique et du capteur (501) a une deuxième valeur (1/δtB) distincte de la première valeur, notamment inférieure à cette première valeur.

10. Procédé d'avitaillement d'un aéronef (400) selon la revendication 7, **caractérisé en ce que** l'organe de détection (701) est configuré pour détecter lorsque la soupape frontale est dans une position intermédiaire, entre une position fermée et une position totalement ouverte, **en ce que** le procédé comprend au moins des étapes consistant à :
b) déterminer une durée (Δt) pendant laquelle la soupape frontale (422) est en position intermédiaire ;
c) comparer la durée déterminée à l'étape b) avec une valeur de seuil (Δ0) ; et
d) en fonction du résultat de la comparaison de l'étape c), considérer que la manoeuvre de verrouillage de l'accrocheur sur l'aéronef a lieu de façon normale ou anormale.

## Patentansprüche

1. Vorrichtung (2) (Auftanken eines Flugzeugs (400), wobei diese Vorrichtung eine Kraftstoffzirkulationsleitung (40) umfasst, deren stromabwärtiges Ende (43) mit einer Betankungskupplung (42) für den Anschluss an eine Einlassöffnung (301) eines Kraftstofftanks (300) des Flugzeugs ausgestattet ist, wobei die Betankungskupplung einen Körper (421) und ein bezüglich des Körpers bewegliches Frontventil (422) umfasst, **dadurch gekennzeichnet**
**dass** die Betankungskupplung (42) mindestens ein Organ (701; 70T) zur Erfassung der Position des Frontventils (422) und ein elektrisches oder elektronisches System (702, 703) zur Übertragung auf eine Bearbeitungsvorrichtung (505, 110) eines Signals (S701) enthält, das für die von dem Erfassungsorgan erfasste Position des Frontventils repräsentativ ist, und dass die Auftankvorrichtung Folgendes umfasst:
- eine Einheit (110; 703) zum Zählen der Betätigungen der Betankungskupplung (42) und/oder der tatsächlichen Nutzungsdauer der Betankungskupplung (42), basierend auf einem Signal (S701; S'701), das repräsentativ für die erfasste Position des Frontventils (422) ist und von dem elektrischen oder elektronischen System (702, 703) übermittelt wird, oder
- einen Speicher zum Speichern der Anzahl von Betätigungen des Frontventils (422), die von dem Erfassungsorgan (701) erfasst werden, während das elektrische oder elektronische Übertragungssystem ein tragbares Endgerät umfasst, das zum Abrufen dieser in dem Speicher gespeicherten Anzahl von Betätigungen dient, wobei dieses tragbare Endgerät dazu vorgesehen ist, an einen Computer angeschlossen zu werden, der eine Verarbeitungseinheit bildet.

2. Auftankvorrichtung nach Anspruch 1, **dadurch gekennzeichnet, dass** das Erfassungsorgan (701; 701') die Position des Frontventils (422) indirekt auf der Grundlage des Abschnitts eines Hebels (424) zur Betätigung des Frontventils erfasst.

3. Auftankvorrichtung nach Anspruch 2, **dadurch gekennzeichnet, dass** das Erfassungsorgan einen Näherungssensor (701; 701') umfasst, der am Körper (421) der Betankungskupplung (422) angebracht ist, und zwar in der Nähe des Hebels (424), wenn sich dieser in einer vorbestimmten Position befindet, insbesondere in einer Position, in der sich das Frontventil (422) in der geschlossenen oder vollständig geöffneten Position befindet.

4. Auftankvorrichtung nach Anspruch 1, **dadurch gekennzeichnet, dass** das Erfassungsorgan (701) die Position des Frontventils (422) direkt erfasst.

5. Auftankvorrichtung nach einem der vorhergehenden Ansprüche, **dadurch gekennzeichnet, dass** das Erfassungsorgan einen elektrischen Kontakt, insbesondere einen elektrischen Trockenkontakt, vorzugsweise einen flexiblen Reed-Schalter (701), umfasst.

6. Auftankvorrichtung nach einem der vorhergehenden Ansprüche, **dadurch gekennzeichnet, dass** sie einen Sensor (501) zur Messung des Wertes eines Parameters (P, T, Q, V), der für einen durch die Betankungskupplung (42) fließenden Kraftstoffstrom (E) repräsentativ ist, mindestens eine Batterie (502) zur elektrischen Versorgung dieses Sensors und eine elektronische Einheit (505) zur Verbindung der Versorgungsbatterie und des Sensors in Abhängigkeit von der Position des Frontventils (422) beinhaltet, die von dem Erfassungsorgan (701) erfasst wird.

7. Verfahren zum Auftanken eines Flugzeugs (400) mit einer Auftankvorrichtung nach einem der vorherigen Ansprüche, **dadurch gekennzeichnet, dass** es mindestens einen Schritt umfasst, der aus Folgendem besteht:
a) Verwenden des von dem elektrischen oder elektronischen System (702, 703) übertragenen Signals (S701), um Mittel (505) zur Versorgung eines Sensors (501) zur Messung des Wertes eines Parameters (P, T, Q, V), der repräsentativ für einen Treibstofffluss (E) ist, der durch die Betankungskupplung (42) hindurchgeht, mit elektrischem Strom zu steuern.

8. Verfahren zum Auftanken eines Flugzeugs (400) nach Anspruch 7, bei dem die Auftankvorrichtung einen Sensor (501) zur Messung des Wertes eines Parameters umfasst (P, T, Q, V), der repräsentativ für einen Treibstofffluss (E) ist, der durch die Betankungskupplung (42) fließt, mindestens eine Batterie (502) zur Versorgung dieses Sensors und eine Einheit (505) zum Anschluss der Versorgungsbatterie und des Sensors, **dadurch gekennzeichnet, dass** die Frequenz (1/δt) des Anschlusses der Versorgungsbatterie und des Sensors in Abhängigkeit von der Nähe des vom Sensor gemessenen Werts (P) zu einem vorbestimmten Schwellenwert (P3) angepasst wird.

9. Verfahren zum Auftanken eines Flugzeugs (400) nach Anspruch 7 mit Hilfe von zwei Auftankvorrichtungen (2A, 2B) nach einem der Ansprüche 1 bis 6, wobei jede Auftankvorrichtung einen Sensor (501) zur Messung des Wertes eines Parameters (P, T, Q, V) umfasst, der repräsentativ für einen Treibstofffluss (E) ist, der durch die Betankungskupplung (42) fließt, mindestens eine Batterie (502) zur Versorgung dieses Sensors und eine Einheit (505) zum Anschluss der Versorgungsbatterie und des Sensors, **dadurch gekennzeichnet, dass**
- für eine erste Auftankvorrichtung (2A) der beiden Auftankvorrichtungen die Anschlussfrequenz der Batterie (502) zur Stromversorgung und des Sensors (501) einen ersten Wert (1/δtA) hat
- für die zweite Auftankvorrichtung (2B) der beiden Auftankvorrichtungen die Anschlussfrequenz der Batterie (502) zur Stromversorgung und des Sensors (501) einen zweiten Wert (1/δtB) hat, der sich von dem ersten Wert unterscheidet und insbesondere kleiner als dieser erste Wert ist.

10. Verfahren zum Auftanken eines Flugzeugs (400) nach Anspruch 7, **dadurch gekennzeichnet, dass** das Erfassungsorgan (701) so konfiguriert ist, dass es erkennt, wenn sich das Frontventil in einer Zwischenstellung zwischen einer geschlossenen Stellung und einer vollständig geöffneten Stellung befindet, und dass das Verfahren mindestens die folgenden Schritte umfasst:
b) Bestimmen einer Zeitdauer (Δt), während der sich das Frontventil (422) in der Zwischenposition befindet;
c) die in Schritt b) ermittelte Dauer mit einem Schwellenwert (Δ0) vergleichen; und
d) in Abhängigkeit vom Ergebnis des Vergleichs in Schritt c) davon ausgehen, dass das Einklinkmanöver der Betankungskupplung am Flugzeug auf normale oder anormale Weise stattfindet.

## Claims

1. Device (2) for refueling an aircraft (400), wherein this device comprises a duct (40) for circulating fuel, the downstream end (43) of which is equipped with a wing coupler (42) for its connection to an inlet orifice (301) of a fuel tank (300) of the aircraft, **characterized in that** the wing coupler comprises a body (421) and a front valve (422) that is movable relative to the body, **characterized in that** the wing coupler (42) comprises at least one member (701; 701') for detecting the position of the front valve (422), and an electrical or electronic transmission system (702, 703) for transmission to a processing unit (505, 110) of a signal (S701) that is representative of the position of the front valve as detected by the detection member,
and **in that** the device for refueling an aircraft comprises
- a unit (110; 703) for counting the maneuvers of the wing coupler (42) and/or the actual duration of use of the wing coupler (42), on the basis of a signal (S701; S'701) that is representative of the detected position of the front valve (422) and is transmitted by the electrical or electronic system (702, 703) or
- a memory for storing the number of operations of the front valve (422) as detected by the detection member (701), and **in that** the electrical or electronic transmission system comprises a portable terminal intended to retrieve this number of maneuvers stored in the memory, wherein this portable terminal is intended to be connected to a computer forming a processing unit.

2. A refueling device according to claim 1, **characterized in that** the detection member (701; 701') detects the position of the front valve (422) indirectly on the basis of the portion of a front valve operating lever (424).

3. A refueling device according to claim 2, **characterized in that** the detection member comprises a proximity sensor (701; 701') mounted on the body (421) of the wing coupler (422), near the lever (424) when the latter is in a predetermined position, in particular in a position where the front valve (422) is in the closed or fully open position.

4. A refueling device according to claim 1, **characterized in that** the detection member (701) detects the position of the front valve (422) directly.

5. A refueling device according to one of the preceding claims, **characterized in that** the detection member comprises an electrical contact, in particular a dry electrical contact, preferably a flexible reed switch (701).

6. A refueling device according to one of the preceding claims, **characterized in that** it comprises a sensor (501) for measuring the value of a parameter (P, T, Q, V) that is representative of a fuel flow (E) passing through the wing coupler (42), at least one battery (502) for the electrical supply of this sensor and an electronic unit (505) for connecting the battery supply and the sensor as a function of the position of the front valve (422) s detected by the detection member (701).

7. A method of refueling an aircraft (400) by means of a refueling device according to one of the preceding claims, **characterized in that** it comprises a step consisting of:
a) using the signal (S701) transmitted by the electrical or electronic system (702, 703) to control means (505) for supplying electric current to a sensor (501) for measuring the value of a parameter (P, T, Q, V) that is representative of a fuel flow (E) passing through the wing coupler (42).

8. A method of refueling an aircraft (400) according to claim 7, wherein this refueling device comprises a sensor (501) for measuring the value of a parameter (P, T, Q, V) that is representative of a fuel flow (E) passing through the wing coupler (42), at least one battery (502) for supplying this sensor and a unit (505) for connecting the battery power supply and the sensor, **characterized in that** the frequency (1/δt) of connecting the battery power supply and the sensor is adapted according to the proximity of the value (P) measured by the sensor with a predetermined threshold value (P3).

9. A method of refueling an aircraft (400) according to claim 7 by means of two refueling devices (2A, 2B) according to one of claims 1 to 6, each refueling device comprising a sensor (501) for measuring the value of a parameter (P, T, Q, V) that is representative of a fuel flow (E) passing through the wing coupler (42), at least one battery (502) for supplying this sensor and a unit (505) for connecting the battery power supply and the sensor, **characterized in that**
- for a first refueling device (2A) among the two refueling devices, the connection frequency of the power supply battery (502) and of the sensor (501) has a first value (1/δtA)
- for the second fueling device (2B) among the two fueling devices, the connection frequency of the battery (502) of the power supply and of the sensor (501) has a second value (1/δtB) distinct from the first value, in particular less than this first value.

10. A method of refueling an aircraft (400) according to claim 7, **characterized in that** the detection member (701) is designed to detect when the front valve is in an intermediate position between a closed position and a fully open position, and **in that** the method comprises at least the steps of:
b) determining a duration (Δt) during which the front valve (422) is in the intermediate position;
c) comparing the duration determined in step b) with a threshold value (Δ0); and
d) depending on the result of the comparison in step c), considering that the locking maneuver of the coupler on the aircraft takes place in a normal or abnormal manner.
